# EUROPÄISCHE PATENTSCHRIFT

(11) **EP 1 698 387 B1**
(45) Veröffentlichungstag und Bekanntmachung des Hinweises auf die Patenterteilung: **27.05.2009**
(21) Anmeldenummer: 06004257.9
(22) Anmeldetag: 02.03.2006
(51) Int. Cl.: B01D 29/27, B01D 35/027

(54) **Filteranordnung mit Filtertasche**
Filter assembly with filter bag
Dispositif de filtration avec poche filtrante

(30) Priorität: 04.03.2005 DE 102005010099
(43) Veröffentlichungstag der Anmeldung: 06.09.2006
(73) Patentinhaber: IBS Filtran Kunststoff-/Metallerzeugnisse GmbH, 51597 Morsbach (DE)
(72) Erfinder: Stausberg, Wolfgang, 51597 Morsbach (DE)
(74) Vertreter: Lang, Friedrich

(56) Entgegenhaltungen:
- EP-A- 0 659 459
- US-A- 3 784 011
- US-A- 4 328 097
- US-A- 4 600 511
- US-A- 4 623 456
- US-A- 5 494 575

## Beschreibung

Die Erfindung betrifft eine Filteranordnung für Motoren und Getriebe mit einem Filtergehäuse, wobei am Filtergehäuse ein Einlass und ein Auslass für ein zu filterndes Fluid ausgebildet sind und wobei im Filtergehäuse ein als Filtertasche ausgebildetes Filtermedium zwischen dem Einlass und dem Auslass angeordnet sind. Ferner betrifft die Erfindung ein Filtermedium, eine Filterschale für ein Filtergehäuse sowie einen Rohrstutzen.

Derartige Filteranordnungen sind aus dem Stand der Technik bekannt. Häufig ist dabei das Filtergehäuse zweiteilig, aus einer Ober- und einer Unterschale bestehend, ausgebildet. Die Ober- und die Unterschale werden an ihren Rändern durch Kleben, Schweißen oder ähnliche aus dem Stand der Technik bekannte Befestigungsmethoden und -mittel verbunden.

Aus dem Stand der Technik ist es bekannt bei Filteranordnungen, bei denen das Filtermedium als Filtertasche ausgebildet ist, die Filtertasche so anzuordnen, dass das zu filternde Fluid, beispielsweise Motor- oder Getriebeöl, vom Filtereinlass aus direkt in die Filtertasche einströmt und dann durch eine der Filtertaschenseiten fließt. Dadurch verbleiben die Rückstände im Inneren der Filtertasche und das gefilterte Öl kann durch den Filtergehäuseauslass abfließen (Inside-Out-Flow). Auf der anderen Seite ist, beispielsweise aus der EP 1 481 716 A1 der Anmelderin, eine Filteranordnung bekannt, bei der ein umgekehrtes Fließschema verwendet wird. Das heißt, das zu filternde Fluid strömt durch den Einlass erst ins Filtergehäuse hinein und dann weiter durch das Filtermedium von außen nach innen in die Filtertasche, von wo es dann weiter zum Auslass fließt (Outside-In-Flow). Bei dieser Anordnung verbleiben die im Fluid vorhandenen Rückstände also außerhalb der Filtertasche im Filtergehäuse. Bei einer Filteranordnung, bei der ein Inside-Out-Flow-Schema verwendet wird, ist die Filtertasche so angeordnet, dass die Filtertaschenöffnung im Wesentlichen deckend mit der Einlassöffnung des Filtergehäuses ausgerichtet ist. Dadurch ist gewährleistet, dass das gesamte zu filternde Fluid zuerst in die Filtertasche einströmt und nicht ungefiltert zum Auslass gelangen kann. Entsprechend ist umgekehrt bei einer Filteranordnung, bei der das Outside-In-Flow-Schema verwendet wird, die Filtertaschenöffnung mit der Auslassöffnung des Filtergehäuses in Einklang gebracht.

Die Filtergehäuse von Filteranordnungen sind häufig relativ flach und wannenartig ausgebildet. Die Filterwanne besteht aus einer oberen und einer unteren Schale, die miteinander verbunden werden, und zwischen denen eine Filtertasche angeordnet wird. Um eine möglichst große Filteroberfläche zu erzielen, wird die Filtertasche so ausgebildet, dass sie möglichst die gesamte Wannenfläche ausfüllt. Wird bei einer Filteranordnung beispielsweise ein Inside-Out-Flow-Schema verwendet, fließt das in der Filtertasche befindliche Fluid über die gesamte Oberfläche der Filtertasche verteilt durch diese hindurch. Wird beispielsweise eine Saugfilteranordnung verwendet, herrscht in den Bereichen, die relativ weit weg vom Auslass liegen, ein niedrigerer Druck, als in den Bereichen, die relativ dicht am Auslass liegen. Weiterhin muss das auf der dem Auslass entgegengesetzt liegenden Seite durch die Filtertasche bereits hindurchgeströmte Öl, erst um die Filtertasche herumfließen, um so zum Auslass zu gelangen. Dadurch kann es insgesamt zu einem inhomogenen Fließverhalten und einer ungleichmäßigen Druckverteilung in der Filteranordnung kommen.

Der Erfindung liegt daher die Aufgabe zugrunde, eine Filteranordnung gemäß dem Oberbegriff des Anspruchs 1, ein Filtermedium gemäß dem Oberbegriff des Anspruchs 19, eine Filterschale für ein Filtergehäuse gemäß dem Oberbegriff des Anspruchs 22 und einen Rohrstutzen gemäß dem Oberbegriff des Anspruchs 24 bereit zu stellen, durch die die Fließraumgestaltung in einer Filteranordnung verbessert und insgesamt ein im Wesentlichen homogeneres Fließverhalten von Fluid in der Filteranordnung erreicht wird.

Erfindungsgemäß wird diese Aufgabe durch die Filteranordnung gemäß Anspruch 1 gelöst. Demnach weist die Filtertasche mindestens einen, durch sie hindurch verlaufenden, kanalartigen Durchlass auf. Der Durchlass geht durch die gesamte Filtertasche hindurch und ist zum Durchfluss von Fluid ausgebildet. Der Durchlass ist in der Art eines Kanals, in Umfangsrichtung in sich geschlossen ausgebildet, so dass das im Durchlass befindliche Fluid nicht in die Filtertasche hinein, sondern nur durch den Durchlass hindurch fließt. Dadurch, dass das außerhalb der Filtertasche befindliche Fluid nicht ausschließlich um die Filtertasche herum, sondern mittels des mindestens einen Durchlasses, auch durch diese hindurch fließen kann, wird eine homogenere Druckverteilung innerhalb des Filtergehäuses erreicht.

Grundsätzlich ist die Erfindung sowohl für Filteranordnungen mit einen Inside-Out-Flow-Schema als auch für Filteranordnungen mit einem Outside-In-Flow-Schema geeignet, wobei bei ersterem Schema bereits gefiltertes Fluid, beispielsweise Getriebeöl, durch den Durchlass hindurch fließt und bei letzterem Schema ungefiltertes Fluid durch den Durchlass fließt. Bevorzugt ist die Filteranordnung als Saugfilteranordnung ausgeführt. Bei Saugfiltern wird ein Unterdruck in der Filteranordnung erzeugt und dadurch das im Filter befindliche Fluid über den Auslass aus dem Filter gesaugt. Durch den Unterdruck fließt das außerhalb der Filtertasche befindliche Fluid von der auslassabgewandten Seite der Filteranordnung durch den Durchlass in der Filtertasche zur auslasszugewandten Seite hin. Ist der Auslass beispielsweise in der Filteroberschale angeordnet, wird das Fluid, das sich zwischen Filtertasche und Unterschale befindet, durch den Unterdruck durch den Durchlass zur Oberschale hingesaugt. Durch das Vorhandensein des Durchlasses muss nur noch ein Teil des zwischen Unterschale und Filtertasche befindlichen Fluids um die Filtertasche herum zum Auslass strömen, während der andere Teil durch den Durchlass zum Auslass fließen kann. Dadurch wird die Druckverteilung in der Filteranordnung homogener und die Fließeigenschaften der Filteranordnung werden verbessert, indem der Fließwiderstand (Saugdruck) reduziert wird.

Um die Fließraumgestaltung der Filteranordnung zu optimieren, können beliebig viele Durchlässe, beliebiger Größen und Formen in der Filtertasche ausgebildet sein. Generell ist es bevorzugt, bei Saugfilteranordnungen den mindestens einen Durchlass in der Nähe des Auslasses anzuordnen, da dadurch ein höherer Unterdruck im dem Auslass entgegengesetzten Bereich der Filteranordnung erzeugt werden kann. Die Filtertasche kann einteilig ausgeführt sein oder aus zwei übereinander liegenden Lagen ausgebildet sein, die in ihren Randbereichen miteinander verbunden sind. Die Filtertaschenöffnung kann nur in einer oder in beiden Lagen ausgebildet sein. Weiterhin weist die Filtertasche in jeder Lage wenigstens eine Ausnehmung auf, durch die der mindestens eine kanalartige Durchlass verläuft. Zur Herstellung der Filtertasche können alle aus dem Stand der Technik bekannten Filtermedien mit Bestandteilen aus synthetischen Fasern, teilsynthetischen Fasern und/oder Naturfaser, wie beispielsweise Filterfliese, Cellulose-Papiere, Glasfasermedien, Metallgewebe und Kunststoffgewebe verwendet werden.

Zweckmäßig ist die Filtertasche im Filtergehäuse im Wesentlichen lagefixiert angeordnet. Die Lagefixierung ist vorteilhaft, da dadurch die Strömungsverteilung in der Filteranordnung konstant gehalten werden kann. Die Lagefixierung beinhaltet zum einen, dass die Filtertasche am Filtergehäuse zumindest teilweise angebracht ist. Die Befestigung der Filtertasche kann beispielsweise durch Verschweißen (zum Beispiel mittels Ultraschall, Laser, Vibration, Schmelzschweißen, etc.) oder Verkleben eines Teilbereichs der Filtertasche mit dem Gehäuse erfolgen. Zum anderen wird die Filtertasche mittels einer im Filtergehäuse angeordneten Stützanordnung, trotz der durch den Fluidfluss auftretenden Strömungskräfte, in ihrer Ursprungsposition gehalten. Bei einer Filteranordnung mit Inside-Out-Flow-Schema wird die Stützanordnung vorteilhafterweise um die Filtertasche herum angeordnet, um so ein, durch das Hereinströmen des Fluids in die Filtertasche hervorgerufenes, Ausbeulen der Filtertasche zu vermeiden. Dagegen ist die Stützanordnung bei einer Filteranordnung mit Outside-In-Flow-Schema vorteilhaft im Inneren der Filtertasche angeordnet, um ein Einfallen der Filtertasche zu vermeiden.

In einer bevorzugten Ausführungsform der Erfindung, ist die Filtertasche umlaufend zwischen der Ober- und der Unterschale eingespannt. Hierdurch kann die Filtertasche auf besonders einfache Art und Weise und ohne zusätzliche Befestigungsmittel im Filtergehäuse fixiert werden. Die Filtertasche wird zwischen der Ober- und der Unterschale eingeklemmt und dann zweckmäßigerweise zusammen mit den Verbindungsbereichen der beiden Schalen verschweißt. Diese vorteilhafte Ausführungsform der Erfindung wird dadurch ermöglicht, dass die Filtertasche mit mindestens einem Durchlass versehen ist, durch welchen das Fluid aus sämtlichen Bereichen des Filtergehäuses zum Auslass hin abfließen kann. Bei einer Ausbildung der Filtertasche ohne Durchlass, ist eine umlaufende Einspannung der Filtertasche hingegen nicht möglich, da dadurch Totzonen entstehen, von denen das Fluid nicht ohne weiteres ablaufen kann. Neben der einfachen Herstellung, ist ein weiterer Vorteil der umlaufenden Einspannung der Filtertasche, dass beim Verschweißen der Schalen miteinander entstehender Schweißaustrieb von der zwischen den Schalen eingeklemmten Filtertasche geblockt wird und so nicht ins Innere der Filteranordnung gelangt. Dies ist insbesondere vorteilhaft bei der Verwendung von Kunststoffschalen, bei deren Verschweißung das Anfallen von Schweißaustrieb besonders problematisch ist. Ohne die umlaufende Einspannung kann der Schweißaustrieb auf die Sauberseite der Filtertasche gelangen und von dort weiter in den Fluidkreislauf, was zu Beschädigungen, beispielsweise am Motor oder am Getriebe, führen kann. Bei der Ausbildung der Filtertasche aus zwei Filterlagen ist es möglich, sowohl beide Lagen umlaufend als auch nur eine Lage komplett umlaufend einzuspannen.

Der Einlass ist häufig in einer anderen Schale des Filtergehäuses angeordnet als der Auslass. Aufgrund konstruktiver Vorgaben kann es erforderlich sein, dass der Ein- bzw. der Auslass im Wesentlichen gegenüberliegend angeordnet sind. Durch eine derartige Anordnung des Ein- und Auslasses wird eine homogene Fließraumgestaltung über den gesamten Querschnitt des Filters weiter erschwert. Dieser negative Effekt wird weiter dadurch verstärkt, dass der Ein- und Auslass nicht nur gegenüberliegend, sondern auch im Randbereich des Filtergehäuses angeordnet sind. Dadurch werden die maximalen Wege, die das Fluid beim Durchströmen der Filteranordnung zurückzulegen hat, verlängert und somit auch die Druckunterschiede innerhalb des Filters erhöht. Diese nachteiligen Effekte werden durch die Ausbildung eines oder mehrerer Durchlässe in der Filtertasche kompensiert.

Grundsätzlich kann der kanalartige Durchlass jedwede Form und Lage aufweisen, solange er durch die Filtertasche hindurch verläuft. Strömungstechnisch ist es bevorzugt, den Durchlass kreiszylindrisch auszubilden, da dies seine Strömungseigenschaften verbessert. Weiterhin ist es bevorzugt, den Durchlass im Wesentlichen senkrecht zur Längsachse der Filteranordnung anzuordnen, da dies im Allgemeinen den kürzesten Weg durch die Filtertasche darstellt.

Der kanalartige Durchlass kann aus dem Filtermedium der Filtertasche gebildet sein. Dabei werden zwei Ausnehmungen auf jeweils zwei gegenüberliegenden Seiten der Filtertasche vorgesehen, die jeweils den Ein- bzw. Ausgang des Durchlasses bilden. Dieser Ein- und Ausgang werden jeweils von einem aus dem Filtermedium der Filtertasche gebildeten Kanal verbunden. So kann durch diese Ausführungsform auch Fluid in der Filtertasche direkt durch die Durchlasswand in den Durchlass gelangen, bzw. durch die Durchlasswand direkt in die Filtertasche strömen.

Alternativ kann der kanalartige Durchlass aus einer separaten Leitungseinheit bestehen, die durch Ausnehmungen in der Filtertasche hindurch verläuft. Die Ausnehmungen werden auf die geometrische Form der Leitungseinheit angepasst oder abgestimmt, so dass die Filtertasche dichtend an der Außenwand der Leitungseinheit anliegt. Die Leitungseinheit ist in Umfangsrichtung in sich geschlossen ausgebildet. Grundsätzlich kann die Leitungseinheit einteilig oder mehrteilig ausgebildet sein. Auch kann ein Teil des durch die Leitungseinheit gebildeten kanalartigen Durchlasses vom Filtergehäuse gebildet sein. Die Leitungseinheit kann aus allem aus dem Stand der Technik bekannten und hierfür geeigneten Materialien gefertigt sein. Bevorzugt ist sie aus Kunststoff hergestellt. Die Leitungseinheit weist einen Einlass und einen Auslass zur Durchströmung von Fluid auf.

Grundsätzlich kann die Leitungseinheit als separates Bauteil oder als Teil des Filtergehäuses ausgebildet sein. Es ist bevorzugt, die Leitungseinheit an mindestens einer Schale des Filtergehäuses auszubilden, so dass die Leitungseinheit von dieser Schale in das Filtergehäuse hinein vorsteht und durch die Filtertasche hindurch verläuft. Die Leitungseinheit kann aber auch durchgängig von der Filterunter- bis zur Filteroberschale verlaufend ausgebildet sein. Hierdurch kann die Schale und die Leitungseinheit als ein Spritzteil, zum Beispiel unter Verwendung eines Faltkernes, ausgebildet sein, wodurch die Herstellung vereinfacht wird.

Alternativ kann die Leitungseinheit als separates Bauteil ausgebildet sein, das am Filtergehäuse, beispielsweise mittels Schweißens, Klebens, einer Rastverbindung und/oder Clips, angebracht ist. Auch hier kann die Leitungseinheit nur an einer oder an beiden Schalen angebracht sein. Bei sämtlichen Ausbildungsformen der Leitungseinheit sind jeweils Ein- und Auslässe in der Leitungseinheit in der Weise vorzusehen, dass Fluid durch die Leitungseinheit hindurch, von einer Seite der Filtertasche auf die andere, fließen kann.

In einer weiteren bevorzugten Ausführungsform ist die Leitungseinheit zur Lagefixierung der Filtertasche ausgebildet. Hierfür sind an der Leitungseinheit Stützanordnungen ausgebildet, die an der Filtertasche anliegen und diese in ihrer ursprünglichen Position halten. Beim Inside-Out-Flow-Schema liegen diese Stützanordnungen vorteilhafterweise außen an der Filtertasche an, wohingegen bei einem Outside-In-Flow-Schema die Stützanordnungen innen an der Filtertasche anliegen und diese auseinander halten. Hierdurch kann die Anzahl an in der Filteranordnung benötigten, separaten Stützanordnungen verringert werden, wodurch der Gesamtaufbau der Filteranordnung weiter vereinfacht wird. Zur besseren Fixierung der Filtertasche ist zweckmäßig, diese an der Leitungseinheit, insbesondere mittels Schweißens, Klebens oder Verklemmens, anzubringen. Die an der Leitungseinheit ausgebildeten Stützanordnungen sind vorzugsweise als Auflageflächen für die Filtertasche ausgebildet, an der diese auch angebracht sein kann. Je größer die Auflageflächen ausgebildet sind, desto besser ist die Stützwirkung. Die Auflageflächen können beispielsweise durch einen treppenartigen Aufbau der Leitungseinheit oder durch Ausbildung von Flanschen an der Leitungseinheit erzeugt werden.

In einer weiteren bevorzugten Ausführungsform der Erfindung ist die Leitungseinheit, die den kanalartigen Durchlass durch die Filtertasche bildet, als Rohrstutzen ausgebildet. Hierdurch wird die Herstellung vereinfacht.

In einer weiteren bevorzugten Ausführungsform sind zur Lagefixierung der Filtertasche und/oder zur Führung des Fluidflusses im Filtergehäuse an der Innenoberfläche des Filtergehäuses bereichsweise Rippen ausgebildet. Die Rippen dienen zum einen der Abstützung der Filtertasche und somit zur Fixierung der Lage derselben. Weiterhin kann durch Variation der Ausgestaltung, Anordnung und/oder Anzahl der Rippen die Fließraumgestaltung der Filteranordnung optimiert werden. Um einen sicheren Durchfluss des Fluids durch die Filteranordnung zu gewährleisten, sind die Rippen nur bereichsweise ausgebildet. Um die Filtertasche wirksam abstützen zu können, sind die Rippen an die Außenseite der Filtertasche anliegend ausgebildet. Diese Ausbildung ist besonders bei einer Filteranordnung mit Inside-Out-Flow-Schema vorteilhaft. Grundsätzlich können die Rippen jede gewünschte Form aufweisen. Um die Herstellung zu vereinfachen, ist es zweckmäßig, die Rippen aus den Filterschalen des Filtergehäuses auszuformen und somit Filterschalen und Rippen einteilig auszubilden. Weiterhin ist es strömungstechnisch sinnvoll, dass die Rippen im Wesentlichen senkrecht von der Filterinnenoberfläche vorstehen. Um zu gewährleisten, dass die Filtertasche in ihrer ursprünglichen Position verbleibt, ist es weiterhin zweckmäßig, die Filtertasche an den Rippen, insbesondere mittels Schweißens oder Klebens, anzubringen. Dadurch wird die Lagefixierung der Filtertasche innerhalb des Filtergehäuses weiter verbessert.

In einer weiteren bevorzugten Ausführungsform ist im Filtergehäuse mindestens ein Stützelement angeordnet, durch das die Ober- und Unterschale des Filtergehäuses gegeneinander abgestützt sind. Durch den im Filtergehäuse herrschenden Unterdruck, beispielsweise bei einer Saugfilteranordnung, biegen sich die Unter- und die Oberschale nach innen in das Filterinnere hinein, wodurch es zu Beschädigungen an der Filteranordnung und schlimmstenfalls zum Bruch des Filtergehäuses kommen kann. Dieses wird durch das Vorhandensein eines Stützelementes verhindert, das im technischen Sinne als Druckstütze wirkt und die Schalen gegeneinander abstützt. Das Stützelement liegt an den beiden Schalen an und verläuft durch das Filtergehäuse hindurch. Um keine zusätzlichen Ausnehmungen in der Filtertasche vornehmen zu müssen und den Aufbau der Filteranordnung weiter zu vereinfachen, ist es zweckmäßig, dass die Leitungseinheit als Stützelement wirkt oder zumindest als Teil des Stützelementes ausgebildet ist. Zur weiteren Vereinfachung des Aufbaus kann das Stützelement eine oder mehrere Rippen umfassen. Die Rippen können beispielsweise mit der Leitungseinheit in der Weise zusammen wirken, dass die Leitungseinheit an einer Filterschale befestigt ist und an einer an der anderen Filterschale angebrachten Rippe anliegt. Dadurch kann die auf das Filtergehäuse aufgebrachte Kraft von der Leitungseinheit in Kombination mit der Rippe abgestützt werden und ein Durchbiegen der Filterschale wird verhindert. Weiterhin ist es möglich, dass das Stützelement nur von der Leitungseinheit gebildet ist, indem die Leitungseinheit sowohl an der Unter- als auch an der Oberschale anliegt und von einer zur anderen verläuft. Um eine möglichst effektive Stützwirkung des Stützelementes zu erreichen, ist es zweckmäßig, dass die Steifigkeit der zur Bildung des Stützelementes verwendeten Komponenten mindestens der Steifigkeit der Filterschalen entspricht.

Die Aufgabe wird für das Filtermedium durch die Merkmale des Anspruches 20 gelöst. Bevorzugte Ausführungsformen werden in den abhängigen Ansprüchen beschrieben.

Die Aufgabe wird für die Filterschale durch die Merkmale des Anspruches 23 gelöst. Die Filterschale und die Leitungseinheit sind einteilig ausgebildet, wobei die Filterschale bevorzugt als Spritzteil ausgeführt ist. Zweckmäßig ist entweder die Öffnung des Einlasses oder die des Auslasses als Ausnehmung in einer Seitenwand der Leitungseinheit im filterschalenseitigen Bereich der Leitungseinheit ausgebildet. Die andere Öffnung ist zweckmäßigerweise am freien Ende der Leitungseinheit ausgebildet. Bevorzugte Ausführungsformen sind in den abhängigen Ansprüchen beschrieben.

Die Aufgabe wird für den Rohrstutzen durch die Merkmale des Anspruchs 26 gelöst. An einem Endbereich des Rohrstutzens ist in dessen Seitenwand mindestens eine Ausnehmung ausgebildet, die den Einlass oder den Auslass des Rohrstutzens bildet. Zweckmäßigerweise ist der Endbereich des Rohrstutzens, in den die mindestens eine Ausnehmung angeordnet ist, zur Anlage an eine Filteranordnung ausgebildet. Durch die mindestens eine Ausnehmung wird gewährleistet, dass bei abschließender Anlage des Rohrstutzens an eine Filteranordnung, ein Ein- bzw. Auslass an dem an der Filteranordnung anliegenden Endbereich des Rohrstutzens vorhanden ist und somit die Durchströmbarkeit des Rohrstutzens sichergestellt ist. Weiterhin sind an der Außenseite des Rohrstutzens mindestens zwei, in längsaxialer Richtung des Rohrstutzens versetzt angeordnete Auflageflächen angeordnet. Die Auflageflächen sind zur Aufnahme von Filtermedien ausgebildet. Die Auflageflächen können grundsätzlich beliebig ausgebildet sein. Bevorzugt werden die Auflageflächen durch eine treppenartige Ausbildung des Rohrstutzens oder durch am Rohrstutzen angebrachte Flansche oder Stege erzeugt. Durch die Ausbildung der Auflageflächen kann der Rohrstutzen zur Abstützung von Filtermedien verwendet werden. Dadurch, dass mindestens zwei längsaxial versetzt angeordnete Auflageflächen an der Außenseite des Rohrstutzens vorhanden sind, ist dieser besonders zur Stützung von als Filtertaschen ausgebildeten Filtermedien geeignet.

Strömungstechnisch ist es zweckmäßig, den Rohrstutzen im Wesentlichen kreiszylindrisch auszubilden, da hierdurch seine Strömungseigenschaften verbessert werden. Ist der Rohrstutzen beispielsweise treppenartig ausgebildet, können mehrere kreiszylindrische Rohrstutzensegmente unterschiedlichen Durchmessers miteinander verbunden werden, um einen Rohrstutzen zu formen.

In einer bevorzugten Ausführungsform der Erfindung sind die Auflageflächen im Wesentlichen senkrecht zur Längsachse des Rohrstutzens ausgerichtet. Weiterhin ist es bevorzugt die Auflageflächen umlaufend um den Rohrstutzen auszubilden. Durch die umlaufende Ausbildung werden die Auflageflächen insgesamt vergrößert und dadurch die Stützwirkung verbessert.

In einer weiteren bevorzugten Ausführungsform sind Befestigungsmittel an den Auflageflächen vorgesehen, durch die auf den Auflageflächen anliegende Filtermedien fest am Rohrstutzen befestigt werden können. Dadurch wird die Stabilität der Verbindung zwischen Filtermedien und Rohrstutzen verbessert und somit eine sichere und dauerhafte Abstützung der Filtermedien sichergestellt. Als Befestigungsmittel können beispielsweise Clips oder Klammervorrichtungen vorgesehen sein. Grundsätzlich können die Befestigungsmittel aber beliebig gestaltet sein. Alternativ ist es möglich, die Filtermedien mittels Schweißens oder Klebens an den Auflageflächen anzubringen. Um eine gute Durchströmung mit hoher Volumenstrommenge zu garantieren, ist es zweckmäßig, mehrere Ausnehmungen am Endbereich des Rohrstutzens auszubilden und diese in Umlaufrichtung nebeneinander anzuordnen. Dadurch wird sichergestellt, dass von allen Seiten des Rohrstutzens her Fluid in den Rohrstutzen ein- bzw. aus dem Rohrstutzen ausströmen kann.

Bevorzugte Ausführungsformen der Erfindung werden im folgenden anhand einem in der Zeichnung dargestellten Ausführungsbeispiel beschrieben. Es zeigen schematisch:
- Fig. 1: eine geschnittene Seitenansicht eines Getriebesaugfilters mit Filtertasche und durch die Filtertasche geführtem Rohrstutzen
- Fig. 2: eine Draufsicht auf die obere Lage der Filtertasche aus Fig. 1; und
- Fig. 3: eine Draufsicht auf die untere Lage der Filtertasche aus Fig. 1.

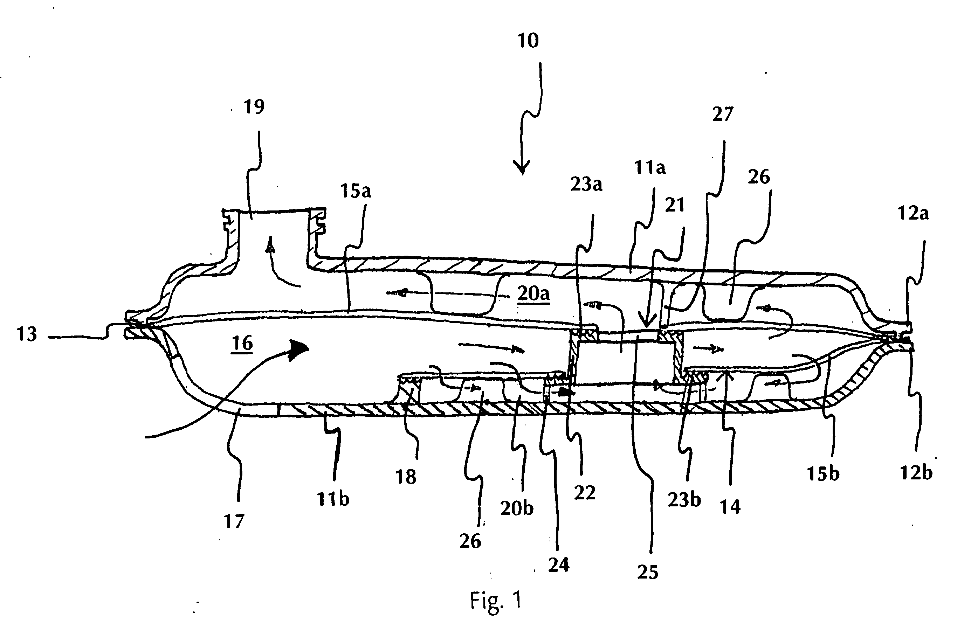

Fig. 1 zeigt eine Getriebeölfilteranordnung 10. Der hier dargestellte Getriebeölfilter 10 ist als Saugfilter ausgeführt. Das Filtergehäuse wird von einer Filteroberschale 11 a und einer Filterunterschale 11 b gebildet, die an ihren Außenrändern jeweils einen umlaufenden Flansch 12a, 12b aufweisen. An der Unterseite des Flansches 12a der Filteroberschale 11 a ist in etwa mittig ein umlaufend ausgebildeter und vom Flansch 12a vorspringender Wulst 13 ausgebildet. Die Ober- und Unterschalen 11 a und 11 b sind in der Weise aufeinander gelegt, dass der Wulst 13 des Flansches 12a der Oberschale 11 a auf der Oberseite des Flansches 12b der Unterschale 11 b anliegt. In Radialrichtung schließen die Flansche 12a, 12b in etwa bündig miteinander ab.

Im Inneren der Filteranordnung 10 ist eine Filtertasche 14 angeordnet. Die Filtertasche 14 besteht aus zwei separaten Filterlagen 15a, 15b. Die obere und untere Filterlage 15a, 15b sind an ihren Rändern, unter Freilassung eins Öffnungsbereiches zur Bildung einer Filtertaschenöffnung 16, aufeinander gelegt und miteinander verschweißt und bilden so die Filtertasche 14.

Die Filtertasche 14 ist in dem Randbereich zwischen den Flanschen 12a, 12b der Ober- und Unterschalen 11 a, 11 b eingeklemmt. Der Wulst 13 des oberen Flansches 12a drückt sich in den eingespannten Bereich der Filtertasche 14 und sichert diese so gegen Herausziehen aus der Einspannung. Zusätzlich werden der obere und der untere Flansch 12a, 12b miteinander verschweißt, wodurch auch der eingeklemmte Bereich der Filtertasche 14 mit den Flanschen 12a, 12b verschweißt wird.

Die Filterschalen 11a, 11b sind aus Kunststoff ausgebildet. Durch Verschweißen der Flansche 12a, 12b der Filterschalen 11 a und 11 b miteinander, wird Schweißaustrieb (hier nicht dargestellt) erzeugt, der von der zwischen den Flanschen 12a, 12b eingespannten Filtertasche geblockt wird und dadurch nicht ins Innere der Filteranordnung 10 gelangen kann. Durch die umlaufende Einspannung der Filtertasche 14 wird sichergestellt, dass an keiner Stelle Schweißaustrieb ins Filterinnere und somit in den Ölkreislauf gelangen kann.

Im dargestellten Beispiel ist nur die obere Lage 15a der Filtertasche 14 umlaufend zwischen den Flanschen 12a, 12b eingespannt, die untere Lage 15b dagegen nur teilweise. Dies rührt daher, dass die untere Lage 15b im Bereich der Filtereinlassöffnung 17 eine Ausnehmung aufweist und so die Filtertaschenöffnung 16 bildet, die so angeordnet ist, dass sie mit der Filtereinlassöffnung 17 in Einklang gebracht ist. Der Randbereich der unteren Filterlage 15b im Bereich der Filtertaschenöffnung 16 liegt auf einem von der Filterunterschale 11 b ins Filterinnere vorspringenden Steg 18 auf und ist mit diesem verschweißt. Die Auflageoberfläche des Steges 18 ist strukturiert ausgebildet, so dass sich eine bessere Haftung der unteren Filterlage 15b auf dem Steg 18 einstellt.

Dadurch, dass die Anordnung der Filtertaschenöffnung 16 an die Lage der Filtereinlassöffnung 17 ausgerichtet ist und die Filtertasche 14 in ihrem Öffnungsbereich 16 am Gehäuse angeschweißt bzw. zwischen den Schalen verklemmt ist, fließt sämtliches in die Filteranordnung 10 durch den Filtereinlass 17 einströmende Öl zunächst in die Filtertasche 14. Der Ölfluss in der Filteranordnung 10 ist durch die Pfeile dargestellt. Der Filtereinlass 17 und der Filterauslass 19 sind jeweils in einem Randbereich der Unterschale 11 b bzw. der Oberschale 11 a und im Wesentlichen gegenüberliegend angeordnet. Durch die gegenüberliegende Anordnung des Filtereinlasses 17 und des Filterauslasses 19, ist im Bereich zwischen diesen beiden Öffnungen nur die obere Filterlage 15a der Filtertasche 14 vorhanden.

Bei der in Fig. 1 dargestellten Filteranordnung 10 wird ein Inside-Out-Flow-Schema verwendet, dass heißt, das in den Filter 10 hineinfließende Öl fließt zunächst in die Filtertasche 14 hinein und dann entweder durch die obere oder durch die untere Filterlage 15a, 15b hindurch. Umgekehrt wäre es möglich, ein Outside-In-Flow-Schema für die Filteranordnung 10 zu verwenden, wobei dann die Filtertaschenöffnung 16 mit der Filterauslassöffnung 19 in Einklang gebracht würde und das Öl zunächst in den Filterinnenraum hineinfließen würde und dann von außen ins Innere der Filtertasche 14 hinein. Beim Outside-In-Flow-Schema verbleiben die Rückstände im Öl also auf der Außenseite der Filtertasche, wohingegen bei der hier gezeigten Ausführungsform die Rückstände im Öl auf der Innenseite der Filtertasche 14 verbleiben.

Das durch die obere Filterlage 15a in den oberen Filterraum 20a geströmte Öl kann direkt zum Filterauslass 19 fließen. Das durch die untere Filterlage 15b in den unteren Filterraum 20b geströmte Öl muss, um zum Filterauslass 19 zu gelangen, erst durch den Filtertaschendurchlass 21 in den oberen Filterraum 20a fließen, von wo es weiter zum Filterauslass 19 strömt. Der obere Filterraum 20a wird vom Bereich zwischen oberer Filterlage 15a und oberer Filterschale 11 a und der untere Filterraum 20b wird vom Bereich zwischen unterer Filterlage 15b und unterer Filterschale 11 b gebildet. Der Filtertaschendurchlass 21 verbindet den oberen Filterraum 20a mit dem unteren Filterraum 20b. Dadurch, dass der Filtertaschendurchlass 21 vorhanden ist, kann die Filtertasche 14 umlaufend zwischen den Filterschalen 11a, 11b eingespannt sein, da ansonsten der freie Ölfluss innerhalb des Filters 10 behindert wäre. Der Durchlass 21 umfasst einen Rohrstutzen 22, der an der unteren Filterschale 11 b angebracht ist und von dieser in etwa senkrecht ins Innere des Filters 10 vorsteht. Der Rohrstutzen 22 und die Filterschale 11 b sind einteilig als Spritzteil ausgebildet. Der Rohrstutzen 22 ist kreiszylinderförmig ausgebildet und weist einen treppenartigen Aufbau auf, wobei er sich zu seinem freien Ende hin verjüngt. Durch den treppenartigen Aufbau des Rohrstutzen 22 werden eine obere Stufe 23a und eine untere Stufe 23b ausgebildet, die jeweils umlaufend ausgebildet sind. Die Stufen 23a, 23b dienen als Auflageflächen für die Filterlagen 15a, 15b, die im Wesentlichen bündig auf diesen anliegen. In den Filterlagen 15a, 15b ist jeweils eine Ausnehmung vorgesehen, so dass ein bündiger Abschluss an den Innenkanten der Auflageflächen 23a, 23b des Rohrstutzens 22 sichergestellt ist. Die Auflageflächen 23a, 23b weisen eine strukturierte Oberfläche auf, so dass eine bessere Haftung der Filterlagen 15a, 15b auf den Auflageflächen 23a, 23b gegeben ist. Weiterhin sind die Filterlagen 15a, 15b mit den Auflageflächen 23a, 23b verschweißt. Dadurch wird die Filtertasche 14 vom Rohrstutzen 22 abgestützt und in ihrer Lage fixiert. Die Seitenwand in dem der Filterschale 11 b zugewandten Bereich des Rohrstutzens 22 ist mit mehreren, in Umfangsrichtung des Rohrstutzens 22 in Aneinanderreihung angeordneten Ausnehmungen 24 versehen, durch die das im unteren Filterraum 20b befindliche, bereits gefilterte Öl in den Rohrstutzen einströmt. An der Stirnseite des freien Endes des Rohrstutzens 22 ist eine Rohrstutzenauslassöffnung 25 angeordnet, durch die das Öl aus dem Rohrstutzen 22 heraus in den oberen Filterraum 20a einströmen kann. Der Rohrstutzen 22 ist aus einem ölundurchlässigen Material, beispielsweise Kunststoff, gefertigt, so dass das Öl nur durch die Ein- und Auslässe 24, 25 in den Rohrstutzen 22 ein- bzw. ausströmen kann.

An den Filterober- und unterschalen 11 a, 11 b sind bereichsweise ins Filterinnere vorstehende Rippen 26 angeordnet, die im Wesentlichen senkrecht in den oberen bzw. unteren Filterraum 20a, 20b vorstehen. Die Stirnseite der Rippen 26 ist als Anlagefläche ausgebildet, mit der die Rippen 26 an der Außenseite der Filtertasche 14 anliegen. Die Rippen 26 üben somit eine Stützwirkung auf die Filtertasche 14 aus und verhindern ein Ausbeulen der Filtertasche 14. Zur weiteren Verbesserung der Lagefixierung der Filtertasche 14 können die Rippen 26 an ihrer Kontaktfläche mit der Filtertasche 14, beispielsweise mittels Schweißens oder Klebens, befestigt werden. Weiterhin wird durch Variation der Anordnung, Form und/oder Anzahl der Rippen 26 der Fluidfluss in der Filteranordnung 10 beeinflusst und die Fließraumgestaltung insgesamt kann optimiert werden.

Weiterhin ist an der Innenseite der oberen Filterschale 11 a ein ins Filterinnere 10 vorstehender Vorsprung 27 ausgebildet, dessen Stirnseite an der oberen Auflagefläche 23a des Rohrstutzens 22 anliegt. Durch die Zusammenwirkung des Vorsprungs 27 mit dem Rohrstutzen 22 stützen diese die obere Filterschale 11a und die untere Filterschale 11b gegeneinander ab. Sie wirken also in Kombination als Druckstütze, durch die ein, durch den in der Filteranordnung 10 vorherrschenden Unterdruck hervorgerufenes Durchbiegen der Filterschalen 11a, 11 b in Richtung Filterinnenraum vermieden wird.

Der Rohrstutzen 22 ist in etwa mittig in der Filteranordnung 10 angeordnet. Durch das Vorhandensein der Strömungsverbindung (in Form des Rohrstutzens 22) zwischen dem oberen Filterraum 20a und dem unteren Filterraum 20b, kann sich der durch das Absaugen des Öls aus der Filteranordnung 10 entstehende Unterdruck sowohl in dem oberen Filterraum 20a als auch in dem unteren Filterraum 20b verteilen. Je näher der Rohrstutzen 22 am Filterauslass 19 angeordnet ist, desto größer ist der Unterdruck im unteren Filterraum 20b und desto konstanter ist die Druckverteilung innerhalb der Filteranordnung 10.

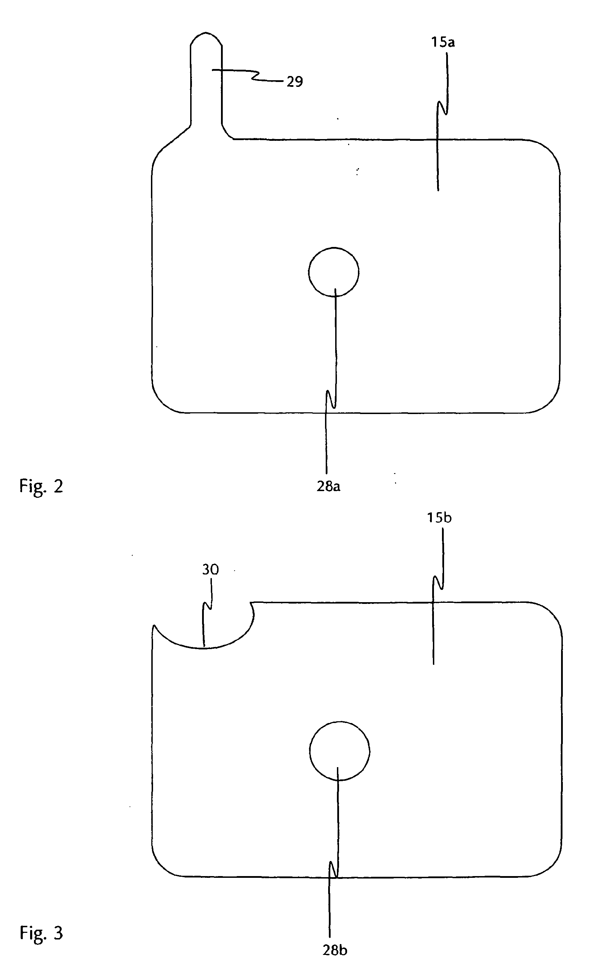

Fig. 2 zeigt eine Draufsicht auf die obere Filterlage 15a der Filtertasche aus Fig. 1. Die Filterlage weist einen im Wesentlichen rechteckigen Grundriss mit abgerundeten Eckbereichen auf. In der Filterlage 15a ist eine im Wesentlichen kreisrunde Ausnehmung 28a angeordnet, durch die der Rohrstutzen der Filteranordnung aus Fig. 1 durchführbar ist. Die Ausnehmung 28a ist beabstandet von den Filterlagenrändern der Filterlage 15a und in etwa mittig angeordnet. Im oberen linken Eckbereich der Filterlage 15a ist aus der Filterlage 15a ein im Wesentlichen senkrecht nach oben abstehender Steg 29 geformt. Wenn die Filterlage 15a in die Filteranordnung aus Fig. 1 eingesetzt ist, befinden sich die Ein- und Auslassöffnung der Filteranordnung im Bereich dieses Stegs 29.

Fig. 3 zeigt eine Draufsicht auf die untere Filterlage 15b der Filtertasche aus Fig. 1. Die Form der Grundfläche der Filterlage 15b entspricht im Wesentlichen der der Filterlage 15a aus Fig. 2. Die Ausnehmung 28b zum Durchlass des Rohrstutzens aus Fig. 1 ist ebenfalls kreisrund, aber mit einem größeren Durchmesser ausgebildet als die Ausnehmung 28a aus Fig. 2. Dieses rührt von der treppenartigen Ausbildung des Rohrstutzens aus Fig. 1, wodurch die untere Filterlage 15b einer größeren Ausnehmung zur bündigen Anlage an den Rohrstutzen bedarf. Im linken oberen Eckbereich der Filterlage 15b ist eine Ausnehmung 30 in Form einer Hälfte einer entlang ihrer Längsachse geteilten Ellipse vorhanden. Die Filterlagen 15a und 15b aus den Figuren 2 und 3 werden aufeinandergelegt und in ihren Randbereichen mittels Schweißens miteinander verbunden, um eine Filtertasche zu formen. Nur im Bereich der Ausnehmung 30 der Filterlage 15b werden die Filterlagen nicht miteinander verbunden, so dass dieser Bereich die Filtertaschenöffnung bildet. Im in die Filteranordnung aus Fig. 1 eingelegten Zustand, wird die Filterlage 15b im Randbereich der Ausnehmung 30 am Filtergehäuse mittels Schweißens angebracht. Die restlichen Randbereiche der Filterlage 15b werden, ebenso wie der gesamte Randbereich der Filterlage 15a, zwischen den zwei Schalen der Filteranordnung aus Fig. 1 eingeklemmt.

## Patentansprüche

1. Filteranordnung (10), insbesondere für Motoren und Getriebe, mit einem Filtergehäuse, welches durch eine obere Filterschale (11 a) und eine untere Filterschale (11 b) gebildet ist, wobei am Filtergehäuse ein Filtergehäuseeinlass (17) und ein Filtergehäuseauslass (19) für ein zu filterndes Fluid ausgebildet sind und wobei im Filtergehäuse eine Filtertasche (14) zwischen dem Filtergehäuseeinlass (17) und dem Filtergehäuseauslass (19) angeordnet ist, wobei ein Durchlass (21) vorgesehen ist, welcher durch die Filtertasche (14) hindurch verläuft und zur Durchströmung durch das Fluid ausgebildet ist,
**dadurch gekennzeichnet,**
**dass** der Durchlass (21) einen Rohrstutzen (22) mit einem Ende aufweist, das an der unteren Filterschale (11 b) angebracht ist, wobei der Rohrstutzen (22) mit einem Rohrstutzeneinlass (24) und einem Rohrstutzenauslass (25) versehen ist, und der Rohrstutzeneinlass (24) an einem Endbereich des Rohrstutzens (22) in dessen Seitenwand mit mehreren in Umfangsrichtung des Rohrstutzens (22) in Aneinanderreihung angeordnete Ausnehmungen ausgebildet ist, wobei der Rohrstutzen (22) einen treppenartigen Aufbau aufweist und sich zu seinem freien Ende hin verjüngt, so dass an der Außenseite des Rohrstutzens (22) eine obere Stufe (23a) und eine untere Stufe (23b) ausgebildet sind, wobei auf der oberen Stufe (23a) eine obere Filterlage (15a) und auf der unteren Stufe (23b) eine untere Filterlage (15b) bündig anliegen, und die obere Stufe (23a) und untere Stufe (23b) in einem Abstand so zueinander angeordnet sind, dass die obere Filterlage (15a) und untere Filterlage (15b) zusammen die Filtertasche (14) bilden, wobei zu filterndes Fluid, welches durch den Filtergehäuseeinlass (17) in das Filtergehäuse eindringt, mit einem Teil des Fluidvolumenstromes durch die untere Filterlage (15b) in Richtung zum Rohrstutzeneinlass (24), dann durch diesen Rohrstutzeneinlass (24) hindurch, dann durch den Rohrstutzen (22) hindurch in Richtung zum Rohrstutzenauslass (25) und durch den Rohrstutzenauslass (25) hindurch oberhalb der oberen Filterlage (15a) in Richtung zum Filtergehäuseauslass (19) strömen kann, während ein anderer Teil des Fluidvolumenstromes durch den Filtergehäuseeinlass (17) in die Filtertasche (14) und durch die obere Filterlage (15a) hindurch in Richtung zum Filtergehäuseauslass (19) strömen kann.

2. Filteranordnung (10) gemäß Anspruch 1,
**dadurch gekennzeichnet,**
**dass** die Filtertasche (14) im Filtergehäuse im Wesentlichen lagefixiert ist.

3. Filteranordnung (10) gemäß Anspruch 2,
**dadurch gekennzeichnet,**
**dass** die Filtertasche (14) umlaufend zwischen der oberen Filterschale (11a) und der unteren Filterschale (11 b) eingespannt ist.

4. Filteranordnung (10) gemäß einem der vorangegangenen Ansprüche, **dadurch gekennzeichnet, daß** der Filtergehäuseeinlass (17) und der Filtergehäuseauslass (19) jeweils in einer anderen Filterschale (17, 19) angeordnet sind, und
dass der Filtergehäuseeinlass (17) und der Filtergehäuseauslass (19) im Wesentlichen gegenüberliegend angeordnet sind.

5. Filteranordnung (10) gemäß Anspruch 4,
**dadurch gekennzeichnet,**
**dass** der Filtergehäuseeinlass (17) und der Filtergehäuseauslass (19) im Randbereich des Filtergehäuses angeordnet sind.

6. Filteranordnung (10) gemäß einem der vorangegangenen Ansprüche,
**dadurch gekennzeichnet, dass** der Durchlass (21) im Wesentlichen kreiszylindrisch ausgebildet ist.

7. Filteranordnung (10) gemäß einem der vorangegangenen Ansprüche,
**dadurch gekennzeichnet,**
**dass** der Durchlass (21) aus dem Filtermedium der Filtertasche (14) gebildet ist.

8. Filteranordnung (10) gemäß einem der vorangegangenen Ansprüche,
**dadurch gekennzeichnet,**
**dass** der Rohrstutzen (22) von der unteren Filterschale (11 b) etwa senkrecht in das Innere der Filteranordnung (10) vorsteht.

9. Filteranordnung (10) gemäß einem vorangegangenen Ansprüche,
**dadurch gekennzeichnet,**
**dass** der Rohrstutzen (22) und die untere Filterschale (11 b) einteilig als Spritzteil ausgebildet sind.

10. Filteranordnung (10) gemäß einem der vorangegangenen Ansprüche,
**dadurch gekennzeichnet,**
**dass** zur Lagefixierung der Filtertasche (14) und/oder zur Führung des Fluidflusses im Filtergehäuse an der Innenoberfläche des Filtergehäuses bereichsweise Rippen (26) ausgebildet sind.

11. Filteranordnung (10) gemäß Anspruch10,
**dadurch gekennzeichnet,**
**dass** die Filtertasche (14) an den Rippen (26), insbesondere mittels Schweißen und/oder Kleben, angebracht ist.

12. Filteranordnung (10) gemäß einem der vorangegangenen Ansprüche,
**dadurch gekennzeichnet,**
**dass** im Filtergehäuse mindestens ein Stützelement (27) angeordnet ist, durch das die obere Filterschale (11a) und die untere Filterschale (11b) des Filtergehäuses gegeneinander abgestützt sind.

## Claims

1. A filter configuration (10), in particular for engines and transmissions, having a filter housing which is formed by a top filter shell (11 a) and a bottom filter shell (11 b), a filter housing inlet (17) and a filter housing outlet (19) for a fluid to be filtered being implemented on the filter housing, and a filter pocket (14) being situated in the filter housing between the filter housing inlet (17) and the filter housing outlet (19), a passage (21) being provided, which runs through the filter pocket (14) and is implemented for the fluid to flow through,
**characterized in that**
the passage (21) has a pipe socket (22), having an end which is attached to the bottom filter shell (11 b), the pipe socket (22) being provided with a pipe socket inlet (24) and a pipe socket outlet (25), and the pipe socket inlet (24) being implemented on an end area of the pipe socket (22), having multiple openings situated around the circumference of the pipe socket (22) arrayed one against another in its side wall, the pipe socket (22) having a stepped construction, and tapering toward its free end, so that an upper step (23a) and a lower step (23b) are formed on the exterior side of the pipe socket (22), an upper filter layer (15a) pressing flush against the upper step (23a) and a lower filter layer (15b) pressing flush against the lower step (23b), and the upper step (23a) and lower step (23b) being situated at a distance to one another in such a way that the upper filter layer (15a) and lower filter layer (15b) form the filter pocket (14) together, fluid to be filtered, which penetrates through the filter housing inlet (17) into the filter housing, being able to flow having a part of the fluid volume flow through the lower filter layer (15b) in the direction toward the pipe socket inlet (24), then through this pipe socket inlet (24), then through the pipe socket (22) in the direction toward the pipe socket outlet (25), and through the pipe socket outlet (25) above the upper filter layer (15a) in the direction toward the filter housing outlet (19), while another part of the fluid volume flow may flow through the filter housing inlet (17) into the filter pocket (14) and through the upper filter layer (15a) in the direction toward the filter housing outlet (19).

2. The filter configuration (10) according to Claim 1,
**characterized in that**
the filter pocket (14) is essentially fixed in place in the filter housing.

3. The filter configuration (10) according to Claim 2,
**characterized in that**
the filter pocket (14) is peripherally clamped between the upper filter shell (11 a) and the lower filter shell (11 b).

4. The filter configuration (10) according to one of the preceding claims,
**characterized in that**
the filter housing inlet (17) and the filter housing outlet (19) are each situated in a different filter shell (17, 19), and
the filter housing inlet (17) and the filter housing outlet (19) are situated essentially opposite to one another.

5. The filter configuration (10) according to Claim 4,
**characterized in that**
the filter housing inlet (17) and the filter housing outlet (19) are situated in the edge area of the filter housing.

6. The filter configuration (10) according to one of the preceding claims,
**characterized in that**
the passage (21) is implemented as essentially circularly cylindrical.

7. The filter configuration (10) according to one of the preceding claims,
**characterized in that**
the passage (21) is formed from the filter medium of the filter pocket (14).

8. The filter configuration (10) according to one of preceding claims,
**characterized in that**
the pipe socket (22) projects approximately perpendicularly from the bottom filter shell (11 b) into the interior of the filter configuration (10).

9. The filter configuration (10) according to one of the preceding claims,
**characterized in that**
the pipe socket (22) and the bottom filter shell (11 b) are implemented in one piece as an injection-molded part.

10. The filter configuration (10) according to one of preceding claims,
**characterized in that**
the ribs (26) are regionally implemented on the inner surface of the filter housing for fixing the filter pocket (14) in place and/or for guiding the fluid flow in the filter housing.

11. The filter configuration (10) according to Claim 10,
**characterized in that**
the filter pocket (14) is attached to the ribs (26), in particular using welding and/or gluing.

12. The filter configuration (10) according to one of the preceding claims,
**characterized in that**
at least one support element (27) is situated in the filter housing, by which the top filter shell (11 a) and the bottom filter shell (11 b) of the filter housing are supported one against another.

## Revendications

1. Disposition de filtre (10), en particulier pour des moteurs et des transmission, avec un corps de filtre formé par une coque de filtre supérieure (11a) et une coque de filtre inférieure (11 b), le corps de filtre présentant une entrée de corps de filtre (17) et une sortie de corps de filtre (19) pour un fluide à filtrer, et le corps de filtre contenant une poche filtrante (14) entre l'entrée de corps de filtre (17) et la sortie de corps de filtre (19), dans lequel est prévu un passage (21) à travers lequel passe la poche filtrante (14) et qui est conçu pour être parcouru par le fluide,
**caractérisée en ce**
**que** le passage (21) possède un raccord de tuyau (22) avec une extrémité qui est appliquée sur la coque de filtre inférieure (11 b), lequel raccord de tuyau (22) possède une entrée de raccord de tuyau (24) et une sortie de raccord de tuyau (25) et l'entrée de raccord de tuyau (24) est formée dans une partie d'extrémité du raccord de tuyau (22) dans la paroi latérale de celui-ci avec plusieurs ouvertures alignées dans le sens de la circonférence du raccord de tuyau (22), le raccord de tuyau (22) présentant une structure en gradins et se resserrant vers son extrémité libre, de sorte qu'il se forme sur la face extérieure du raccord de tuyau (22) un gradin supérieur (23a) et un gradin inférieur (23b), une couche filtrante supérieure (15a) reposant de niveau sur le gradin supérieur (23a) et une couche filtrante inférieure (15b) sur le gradin inférieur (23b), et le gradin supérieur (23a) et le gradin inférieur (23b) étant disposés à une distance l'un de l'autre telle que la couche filtrante supérieure (15a) et la couche filtrante inférieure (15b) forment ensemble la poche filtrante (14), le fluide à filtrer qui entre dans le corps de filtre par l'entrée de corps de filtre (17) pouvant circuler avec une partie du débit de volume du fluide à travers la couche filtrante inférieure (15b) en direction de l'entrée de raccord de tuyau (24), puis à travers cette entrée de raccord de tuyau (24), puis à travers le raccord de tuyau (22) en direction de la sortie de raccord de tuyau (25) et à travers la sortie de raccord de tuyau (25) au-dessus de la couche filtrante supérieure (15a) en direction de la sortie de corps de filtre (19), tandis qu'une autre partie du débit de volume de fluide peut s'écouler à travers l'entrée de corps de filtre (17) dans la poche filtrante (14) et à travers la couche filtrante supérieure (15a) en direction de la sortie de corps de filtre (19).

2. Disposition de filtre (10) selon la revendication 1,
**caractérisée en ce**
**que** la poche filtrante (14) est fixée pour l'essentiel en position dans le corps de filtre.

3. Disposition de filtre (10) selon la revendication 2,
**caractérisée en ce**
**que** la poche filtrante (14) est serrée sur sa circonférence entre la coque de filtre supérieure (11a) et la coque de filtre inférieure (11b).

4. Disposition de filtre (10) selon l'une des revendications précédentes,
**caractérisée en ce**
**que** l'entrée de corps de filtre (17) et la sortie de corps de filtre (19) sont disposées chacune dans une coque de filtre (17, 19) différente et en ce que l'entrée de corps de filtre (17) et la sortie de corps de filtre (19) sont disposées pour l'essentiel l'une en face de l'autre.

5. Disposition de filtre (10) selon la revendication 4,
**caractérisée en ce**
**que** l'entrée de corps de filtre (17) et la sortie de corps de filtre (19) sont disposées dans la zone de bord du corps de filtre.

6. Disposition de filtre (10) selon l'une des revendications précédentes,
**caractérisée en ce**
**que** le passage (21) a pour l'essentiel une forme cylindrique circulaire.

7. Disposition de filtre (10) selon l'une des revendications précédentes,
**caractérisée en ce**
**que** le passage (21) est formé par le support filtrant de la poche filtrante (14).

8. Disposition de filtre (10) selon l'une des revendications précédentes,
**caractérisée en ce**
**que** le raccord de tuyau (22) dépasse de la coque de filtre inférieure (11 b) approximativement à angle droit à l'intérieur de la disposition de filtre (10).

9. Disposition de filtre (10) selon l'une des revendications précédentes,
**caractérisée en ce**
**que** le raccord de tuyau (22) et la coque de filtre inférieure (11 b) sont formés d'une seul tenant sous la forme d'une pièce moulée par injection.

10. Disposition de filtre (10) selon l'une des revendications précédentes,
**caractérisée en ce**
**que** pour fixer la poche filtrante (14) en position et/ou guider le flux de fluide dans le corps de filtre, des nervures (26) sont prévues par endroit sur la surface intérieure du corps de filtre.

11. Disposition de filtre (10) selon la revendication 10,
**caractérisée en ce**
**que** la poche filtrante (14) est appliquée sur les nervures (26), en particulier au moyen d'un soudage et/ou d'un collage.

12. Disposition de filtre (10) selon l'une des revendications précédentes,
**caractérisée en ce**
**qu'**il est prévu dans le corps de filtre au moins un élément d'appui (27) par l'intermédiaire duquel la coque de filtre supérieure (11a) et la coque de filtre supérieure (11 b) du corps de filtre s'appuient l'une contre l'autre.
